# EUROPÄISCHE PATENTSCHRIFT

(11) **EP 3 513 127 B1**
(45) Veröffentlichungstag und Bekanntmachung des Hinweises auf die Patenterteilung: **14.07.2021**
(21) Anmeldenummer: 17778192.9
(22) Anmeldetag: 13.09.2017
(51) Int. Cl.: F24C 15/20

(54) **DUNSTABZUGSVORRICHTUNG MIT ANSAUGSTUTZEN**
EXTRACTOR DEVICE WITH AIR INTAKE
HOTTE ASPIRANTE COMPORTANT UNE TUBULURE D'ASPIRATION

(30) Priorität: 16.09.2016 DE 102016117537
(43) Veröffentlichungstag der Anmeldung: 24.07.2019
(73) Patentinhaber: Inovvida Aero IP UG (Haftungsbeschränkt), 59757 Arnsberg (DE)
(72) Erfinder: BERLING, Udo, 48496 Hopsten (DE)
(74) Vertreter: Geskes, Christoph
(86) Internationale Anmeldenummer: PCT/EP2017/073060
(87) Internationale Veröffentlichungsnummer: WO 2018/050719

(56) Entgegenhaltungen:
- CN-A- 105 545 771
- DE-A1-102007 051 942
- US-A- 2 554 694
- US-A- 2 674 991
- US-A1- 2002 182 060
- US-A1- 2014 048 057

## Beschreibung

Die vorliegende Erfindung bezieht sich auf eine Dunstabzugsvorrichtung mit einem ersten Luftführungskanal, der eine Mündungsöffnung aufweist, die in einer ersten Ebene auf oder oberhalb der Ebene eines Kochfeldes gelegen ist, wobei der erste Luftführungskanal die angesaugte Abluft in einen Bereich unterhalb der Ebene eines Kochfeldes ableitet, und der erste Luftführungskanal mit einem in einer zweiten Ebene unterhalb des Kochfeldes angeordneten Absauggebläse verbunden ist.

Aus der Schrift US 5,884,619 ist eine gattungsgemäße Dunstabzugsvorrichtung bekannt. Anders als Dunstabzugshauben, die oberhalb eines Kochfeldes angebracht sind und die vom Kochfeld aufsteigende Abluft von oben her absaugen, verfügt die hier offenbarte Dunstabzugsvorrichtung über einen Luftführungskanal, dessen Mündungsöffnung etwas oberhalb der Ebene des Kochfeldes liegt und der die Abluft nach unten abführt. In einer Ebene unterhalb des Kochfeldes ist das Absauggebläse angeordnet, mit dem die Abluft angesaugt und über einen Ausblaskanal abgeführt wird. Der Vorteil einer solchen Anordnung ist darin zu sehen, dass der Luftraum oberhalb des Kochfeldes frei bleibt und nicht mit einer voluminösen Dunstabzugshaube zugebaut wird. Der Koch kann besser in die Töpfe schauen, und man stößt sich nicht mehr den Kopf an hervorstehenden Bauteilen der Dunstabzugshaube.

US 2002/0182060 A1 offenbart eine Vorrichtung zur Luftreinigung für Reinheitsräume, bei der die zu reinigende Luft axial angesaugt und über einen Lüfter umgelenkt wird und durch einen Filter in einer zu der Ansaugrichtung gleichen Richtung axial ausströmt. US 2,554,694 offenbart eine Dunstabzugsvorrichtung, die einen über einer Kochplatte und dort angeordnete Töpfe schwenkbaren Ansaugarm mit einer der Kochplatte zugewandten Ansaugöffnung aufweist. Die Kochwrasen werden über einen oberhalb der Kochplatte angeordneten Lüfter angezogen und aus diesem seitlich über einen Filter aus der Vorrichtung herausgeleitet.

Aus der Schrift DE 10 2011 015 360 A1 ist eine Dunstabzugshaube mit einem Gehäuse und einem darin angeordneten Radiallüfter bekannt, der einen Abluftstrom durch eine Ansaugöffnung ansaugt, beschleunigt und an Mündungsöffnungen zwischen den Luftschaufeln in einen den Radiallüfter ringförmig umschließenden Luftführungskanal ausbläst. Der Vorteil des in der Dunstabzugshaube verbauten Radiallüfters ist darin zu sehen, dass der Abluftstrom zwischen den Luftschaufeln extrem beschleunigt und danach so scharf umgelenkt wird, dass in der Abluft schwebende Partikel, insbesondere Fett- und Ölmoleküle, dabei an der Seitenwand des um den Außenumfang des Radiallüfters ausgebildeten Ringraums abgeschieden werden. Die Abluft ist dadurch weitgehend frei von Öl- und Fettpartikeln, wodurch sich diese Dunstabzugshaube besonders für den Umluftbetrieb und den Einsatz von Abluftfiltern eignet, die nicht mehr so häufig gewechselt und/oder gereinigt werden müssen. Diese Dunstabzugshaube ist aber nur für die Aufhängung oberhalb eines Kochfeldes vorgesehen.

Es ist die Aufgabe der vorliegenden Erfindung, eine Dunstabzugsvorrichtung zu schaffen, die unterhalb eines Kochfeldes angeordnet ist und ebenfalls hohe Abscheidegrade von Fett- und Ölpartikeln ermöglicht.

Die Aufgabe wird für eine gattungsgemäße Dunstabzugsvorrichtung gelöst, indem das Absauggebläse einen Radiallüfter aufweist, der in der zweiten Ebene unterhalb des Kochfeldes angeordnet ist, wobei die Ansaugöffnung des Radiallüfters nach oben dem Kochfeld zugewandt ist und der erste Luftführungskanal in der Ansaugöffnung des Radiallüfters mündet, um den Radiallüfter herum ein diesen ringförmig umschließender und nach oben in Richtung des Kochfeldes geschlossener Ringraum ausgebildet ist, in den der zwischen den Luftschaufeln aus dem Radiallüfter ausströmende Abluftstrom einströmt, der Ringraum eine zum Außenumfang des Radiallüfters beabstandete Seitenwand aufweist, durch die der aus dem Radiallüfter in einer zur Drehachse des Radiallüfters zumindest annähernd radialen Richtung austretende Abluftstrom in eine zur Drehachse zumindest annähernd axialen Strömungsrichtung umgelenkt wird, und in einer dritten Ebene unterhalb des Radiallüfters ein Auffangbehälter zum Auffangen von an der Seitenwand ablaufenden Partikeln ausgebildet ist, wobei der Abluftstrom aus dem Ringraum in einem zweiten Luftführungskanal, der den Abluftstrom in eine vom Auffangbehälter weg weisende Strömungsrichtung leitet, aus dem Absauggebläse ausströmt.

Durch die erfindungsgemäße Anordnung des Radiallüfters in einer zweiten Ebene unterhalb des Kochfeldes ist es möglich, die technischen Vorteile eines Radiallüfters auch in dieser Einbausituation zu nutzen. Durch den obenseitigen Anschluss des die Abluft vom Kochfeld nach unten führenden ersten Luftführungskanals muss die Abluft nicht seitlich um den Radiallüfter herumgeführt werden. Bei der Durchströmung des rotierend angetriebenen Radiallüfters kann diese wie vorbekannt beschleunigt werden. Bei der anschließenden Umlenkung des aus dem Radiallüfter ausströmenden Abluftstroms können ebenfalls wie bekannt die Fett- und Ölpartikel aus dem Abluftstrom ausgeschieden und an der Seitenwand des Ringraums abgeschieden werden.

Durch die Anordnung des Auffangbehälters unterhalb des Radiallüfters kann sowohl die Schwerkraft als auch die Förderwirkung des an der Seitenwand entlang strömenden Abluftstroms ausgenutzt werden, an der Seitenwand anhaftende Öle und Fette in Richtung des Auffangbehälters zu transportieren. Um zu vermeiden, dass sich die Bewegungsrichtungen des Abluftstroms und der von der Seitenwand herabtropfenden Öle und Fette kreuzen, ist es erfindungsgemäß vorteilhaft, den Abluftstrom durch einen Luftführungskanal zu leiten, der den Abluftstrom in eine vom Auffangbehälter weg weisende Strömungsrichtung leitet und der Abluftstrom erst danach aus dem Absauggebläse ausströmt. Dadurch kann sich das Öl und Fett im Auffangbehälter ansammeln, ohne dass dabei das Risiko besteht, dass der Abluftstrom Teile dieser zuvor aus- und abgeschiedenen Partikel wieder mit sich mitnimmt.

Wenn in der vorliegenden Beschreibung von einer axialen oder radialen Richtung die Rede ist, so beziehen sich diese Angaben immer auf die Drehachse des Radiallüfters.

Nach einer Ausgestaltung der Erfindung ist der erste Luftführungskanal mehrteilig mit zumindest einem oberen und einem unteren Kanalbauteil ausgebildet, an den einander zugewandten Enden der Kanalbauteile sind Steckkupplungen ausgebildet, über die die Kanalbauteile werkzeuglos lösbar und luftdicht miteinander verbindbar sind, und das obere Kanalbauteil, an dem die Mündungsöffnung ausgebildet ist, ist mit dem von der Mündungsöffnung abgewandten Ende durch die Ebene des Kochfelds hindurch in die Steckkupplung eines unterhalb der Ebene des Kochfelds endenden unteren Kanalbauteils einsteckbar. Wenn nicht mit dem Kochfeld gekocht wird, oder wenn gekocht wird, ohne dass dabei die anfallenden Kochdünste über die Dunstabzugsvorrichtung abgeführt werden sollen, kann ein oberes Ende eines Luftführungskanals mit einer daran ausgebildeten Mündungsöffnung bei der Arbeit in der Küche stören. In solchen Fällen ist es wünschenswert, wenn das obere Kanalbauteil aus seiner Betriebsstellung entfernt werden könnte. Das ist erfindungsgemäß auf einfache Weise möglich, indem das obere Kanalbauteil einfach aus der Steckkupplung des nächsten unteren Kanalbauteils herausgezogen und an einer nicht störenden Stelle, beispielsweise in einem Unterschrank der Küche, während des Nichtgebrauchs gelagert wird. Nach dem Entfernen des oberen Kanalbauteils stehen keine störenden Bauteile mehr über die Ebene des Kochfelds und einer umgebenden Arbeitsplatte mehr hervor. Ein Koch kann dann ungestörter arbeiten und nahezu seine gesamte Arbeitsfläche nutzen, ohne dabei auf das obere Kanalbauteil Rücksicht nehmen zu müssen. Soll die Dunstabzugsvorrichtung wieder in Betrieb genommen werden, so genügt es, das obere Kanalbauteil mit der an seinem unteren Ende ausgebildeten Steckkupplung in die Steckkupplung des oberen Endes des unteren Kanalbauteils einzustecken, so dass sich das obere Kanalbauteil wieder in seiner Betriebsstellung befindet. Vorteilhaft sind die Steckkupplungen so ausgebildet, dass sie das Lösen und Verbinden der Teile der Steckkupplungen möglichst vereinfachen, wie beispielsweise durch konisch geformte Enden. Ein werkzeuglos mögliches Einstecken und Abnehmen vereinfacht den täglichen Gebrauch. Auf gesonderte Werkzeuge kann beispielsweise verzichtet werden, wenn die Kanalbauteile über Rast- oder Klemmverbindungen oder über Bajonettverschlüsse miteinander verbunden sind. Um Leistungsverluste und die Ansammlung von Kondenswasser im Unterschrank zu vermeiden, sollten die Steckkupplungen möglichst luft- und auch wasserdicht ausgebildet sein.

Nach einer Ausgestaltung der Erfindung ist mit dem Kochfeld oder einer das Kochfeld umgebenden Arbeitsplatte eine Haltemuffe fest verbunden, die eine Öffnung aufweist, deren Maß und Form dem Außenumfang des oberen Kanalbauteils entspricht, wobei die Haltemuffe eine Führungshilfe beim Einschieben des unteren Endes des oberen Kanalbauteils in die Steckkupplung des unterhalb der Ebene des Kochfelds endenden unteren Kanalbauteils bildet. Das Einsetzen und Herausnehmen des oberen Kanalbauteils wird vereinfacht, wenn dieses aus einer Haltemuffe herausgezogen oder in eine Haltemuffe eingesteckt wird, die fest mit dem Kochfeld und/oder der Arbeitsfläche verbunden ist. Die Haltemuffe kann dabei eine Führungshilfe darstellen, durch die ein spannungsfreies Ausziehen oder Einstecken der Steckkupplungen vereinfacht wird. Die Haltemuffe ist auch vorteilhaft bei der erstmaligen Montage einer Küche, weil über die Haltemuffe Toleranzen zwischen der Außenumfangsform des oberen Kanalbauteils und der in eine Arbeitsplatte oder das Kochfeld zu schneidenden Öffnung ausgeglichen werden können. Während die Form und die Maße der Öffnung zur Aufnahme des oberen Kanalbauteils in die Haltemuffe genau an die Maße und die Form des oberen Kanalbauteils angepasst sind, können die Bauteile der Haltemuffe, die dazu dienen, eine Verbindung zur Arbeitsplatte oder dem Kochfeld herzustellen, so ausgebildet sein, dass sie größere Toleranzen in den Maßen des erforderlichen Ausschnitts in der Arbeitsplatte oder dem Kochfeld zu überdecken vermögen.

Nach einer Ausgestaltung der Erfindung ist die Öffnung der Haltemuffe mit einem Deckel verschließbar, wenn das obere Kanalbauteil nicht in die Haltemuffe und die Steckkupplung des unterhalb der Ebene des Kochfelds endenden unteren Kanalbauteils eingesteckt ist. Der Deckel kann als ein gesondertes Bauteil ausgebildet sein, oder der Deckel ist einteilig mit der Haltemuffe verbunden, beispielsweise über ein Scharnier oder ein Filmscharnier. Durch den Verschluss der Öffnung in der Haltemuffe wird vermieden, dass Essensreste oder sonstiger Schmutz durch die Öffnung in den darunter befindlichen Unterschrank oder den Radiallüfter fallen können, wenn auf dem Kochfeld oder der Arbeitsplatte gearbeitet wird und das obere Kanalbauteil entnommen worden ist.

Nach einer Ausgestaltung der Erfindung ist das obere Kanalbauteil als ein Rohrbogen ausgebildet, dessen unterer Schaft in vertikaler Richtung auf das obere Ende eines unteren Kanalbauteils aufsteckbar ist und dessen mittlerer Abschnitt und/oder das der Mündungsöffnung zugewandte Ende eine Krümmung aufweist. Bei der gekrümmten Ausgestaltung steht zumindest der Teil des oberen Kanalbauteils ab der Krümmung über die Ebene des Kochfeldes über. Das hat allerdings den Vorteil, dass die Mündungsöffnung in der Höhe und in Querrichtung dichter an die Dampfaustrittsöffnung eines Topfs und damit an die Quelle der abzusaugenden Abluft herangeführt werden kann. Bei einer rotatorischen Bewegung des oberen Kanalbauteils um die Hochachse des ersten Luftführungskanals, um die das obere Kanalbauteil beweglich sein kann, ist es auch möglich, die Mündungsöffnung gezielt auf einen oder mehrere Töpfe auszurichten. Dadurch erhöht sich insgesamt die Effektivität der Ansaugung der Dunstabzugsvorrichtung. Das obere Kanalbauteil kann einstückig ausgebildet sein, oder es sind noch zusätzliche Aufsteckteile oder telekopierbare Endstücke vorhanden, durch die die Mündungsöffnung noch genauer und vielseitiger in eine gewünschte Stellung gebracht werden kann. Es kann auch ein Satz verschiedener, unterschiedlich langer, hoher oder gekrümmter oberer Kanalbauteile mit unterschiedlich geformten Mündungsöffnungen zu einer Dunstabzugsvorrichtung gehören, die je nach Einsatzbedarf ausgewählt und verwendet werden können.

Nach einer Ausgestaltung der Erfindung ist der Radiallüfter in einen Unterschrank in einer zweiten Ebene unterhalb des Kochfeldes in einen Auszug eingebaut, der aus einer Gebrauchsstellung im Unterschrank in eine Wartungsposition außerhalb des Unterschranks verbringbar ist. Durch die Montage des Radiallüfters in einem Auszug ist dieser leichter zugänglich, wenn er gewartet oder gereinigt werden muss. Dass ist insbesondere deshalb wichtig, weil der Radiallüfter bei seinem Betrieb größere Mengen von Öl und Fett aus der Abluft abzuscheiden vermag und deshalb öfter gereinigt werden muss als herkömmliche Dunstabzugsvorrichtungen.

Nach einer Ausgestaltung der Erfindung arretiert das obere Kanalbauteil in seiner Einsteckposition den Radiallüfter und den Auszug in der Gebrauchsstellung. Es ist vorteilhaft, den Radiallüfter in der Gebrauchsstellung zu arretieren, um Fehlbedienungen und Fehlfunktionen zu vermeiden. Um sicherzustellen, dass der Radiallüfter nur dann betrieben werden kann, wenn sich das obere Kanalbauteil in seiner Gebrauchsstellung befindet, kann ein mechanischer oder elektrischer Kontakt mit der elektronischen Steuerung der Dunstabzugsvorrichtung verbunden sein. Ein Einschalten des Radiallüfters ist nur dann möglich, wenn der mechanische oder elektrische Kontakt meldet, dass sich das obere Kanalbauteil in seiner Betriebsstellung befindet.

Nach einer Ausgestaltung der Erfindung ist zwischen dem Radiallüfter und dem Auffangbehälter eine Trennstelle ausgebildet, über die der Radiallüfter mit dem Auffangbehälter werkzeuglos lösbar verbunden ist. Eine solche Trennstelle macht es möglich, für Reinigungsarbeiten zunächst nur den Radiallüfter aus seiner Betriebsstellung zu entfernen und zu reinigen. Nachdem der Radiallüfter aus seiner Betriebsstellung entfernt ist, kann zunächst nur ohne großen Aufwand mit einem Blick überprüft werden, ob auch der Auffangbehälter überhaupt gereinigt und dafür aus seiner Einbaulage entfernt werden muss. Nur wenn eine intensivere Reinigung erforderlich erscheint, muss dann auch der Auffangbehälter aus seiner Betriebsstellung genommen und gesäubert werden. Auch hier ist das werkzeuglose Lösen oder Verbinden der Bauteile miteinander beispielsweise über Rast- oder Klemmverbindungen oder über Bajonettverschlüsse möglich.

Nach einer Ausgestaltung der Erfindung ist der Auffangbehälter werkzeuglos lösbar mit dem Auszug verbunden. Für die werkzeuglos lösbare Verbindung gelten die vorstehenden Ausführungen.

Nach einer Ausgestaltung der Erfindung bläst der Radiallüfter aus dem zweiten Luftführungskanal in den Innenraum eines Unterschranks, dessen Innenraum zu angrenzenden Bauteilen und im Bereich der Zugangsöffnung luftdicht abgedichtet ist, wobei der Unterschrank eine Ausblasöffnung aufweist, der eine Filtereinheit zugeordnet ist. Die Filtereinheit kann der Ausblasöffnung nachgeordnet, aber auch vorgeordnet sein, insbesondere bietet sich an, eine vorgeordnete Filtereinheit im Innenraum des Unterschranks anzuordnen. Im Verhältnis zum lichten Querschnitt des zweiten Luftführungskanals bedeutet die freie Querschnittsfläche des Innenraums des Unterschranks eine Vergrößerung des für den Abluftstrom verfügbaren Strömungsraums, aus dem sich eine Verlangsamung der Strömungsgeschwindigkeit ergibt. Durch die luftdichte Abdichtung des Innenraums des Unterschranks kann die Abluft nur durch die Ausblasöffnung aus dem Unterschrank heraus gelangen. Im Unterschrank kann sich bei laufendem Betrieb des Radiallüfters durch die Abdichtung ein leichter Überdruck aufbauen. Wenn der Ausblasöffnung eine Filtereinheit zugeordnet ist, kann diese Filtereinheit die gesamte vom Radiallüfter bewegte Abluft filtern. Die in dem vergrößerten Strömungsraum im Unterschrank angeordnete Filtereinheit kann wegen dem vergrößerten Strömungsquerschnitt mit einer vergleichsweise langsamen Strömungsgeschwindigkeit vom Luftstrom durchströmt werden. Durch den verlangsamten Luftstrom erhöht sich die Abscheideleistung der Filtereinheit.

Nach einer Ausgestaltung der Erfindung besteht die Filtereinheit aus zumindest einer großflächig angeordneten Lage eines Filtermaterials. Mit der großflächigen Anordnung des Filtermaterials ist eine Anordnung gemeint, deren Querschnittsfläche größer ist als der Strömungsquerschnitt des zweiten Luftführungskanals. Die Filtereinheit kann sich beispielsweise über die volle Höhe oder teilweise Höhe des Innenraums des Unterschranks und über die volle oder teilweise Breite des Innenraums des Unterschranks erstrecken. Bei einer Schrägstellung kann die Höhe oder die Breite des Innenraums des Unterschranks noch überschritten werden. Als Filtermaterial kann beispielsweise Aktivkohle verwendet werden, die über eine hohe spezifische Oberfläche verfügt. Mit Aktivkohle können beispielsweise Geruchsmoleküle sehr effektiv aus dem Abluftstrom herausgefiltert werden. Anstelle von Aktivkohle können aber auch andere Filtermaterialien, wie beispielsweise Papierfilter, verwendet werden. Neben der großflächigen Anordnung des Filtermaterials kann dieses auch mehrlagig oder in einer dicken Lage verwendet sein.

Nach einer Ausgestaltung der Erfindung ist eine Steckkupplung mit einem elektrischen Kontakt versehen, der als Sensor und/oder Stromanschluss ausgebildet ist. Wenn der elektrische Kontakt als Sensor ausgebildet ist, kann durch eine Kontaktierung die Dunstabzugsvorrichtung ein- oder ausgeschaltet werden. Über das Signal des elektrischen Kontaktes kann auch eine Zuhaltung des Unterschranks gesteuert sein, über die der Unterschrank verriegelt ist, wenn das obere Kanalbauteil in die Betriebsstellung eingesteckt ist. Genauso kann die Inbetriebnahme blockiert sein, wenn der elektrische Kontakt keinen Kontakt mit einem eingesteckten Kanalbauteil meldet, wenn sich das Absauggebläse im Betrieb befindet. Wenn der elektrische Kontakt als Stromversorgung ausgebildet ist, kann darüber eine am Kanalbauteil angebrachte Beleuchtungsvorrichtung mit Strom versorgt werden, die direkt in die Töpfe auf dem Kochfeld leuchten kann. Über die Stromversorgung kann auch eine Ladestation für ein Smart Device wie ein Handy, ein schnurloses Telefon, ein Bildschirm oder ein Tablet Computer mit Strom versorgt werden. Über die Stromversorgung können auch elektrische Küchengeräte wie ein Mixer, eine Kaffeemaschine, oder dergleichen betrieben werden.

Es wird ausdrücklich darauf hingewiesen, dass jede der vorstehend beschriebenen Ausgestaltungen der Erfindung für sich, aber auch in einer beliebigen Kombination einzelner, mehrerer oder aller übrigen Ausgestaltungen mit dem Gegenstand der Haupt- und Nebenansprüche kombinierbar sind, soweit dem keine technisch zwingenden Hintergründe entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Schnittansicht auf einen Unterschrank, in den zwei Dunstabzugsvorrichtungen eingebaut sind,
- Fig. 2:: eine vergrößerte Ansicht des Kreises A aus der Fig. 1,
- Fig. 3:: eine vergrößerte Ansicht des Kreises B aus der Fig. 1, und
- Fig. 4:: eine Seiten-Schnittansicht der in den Fig. 1 - 3 gezeigten Dunstabzugsvorrichtung.

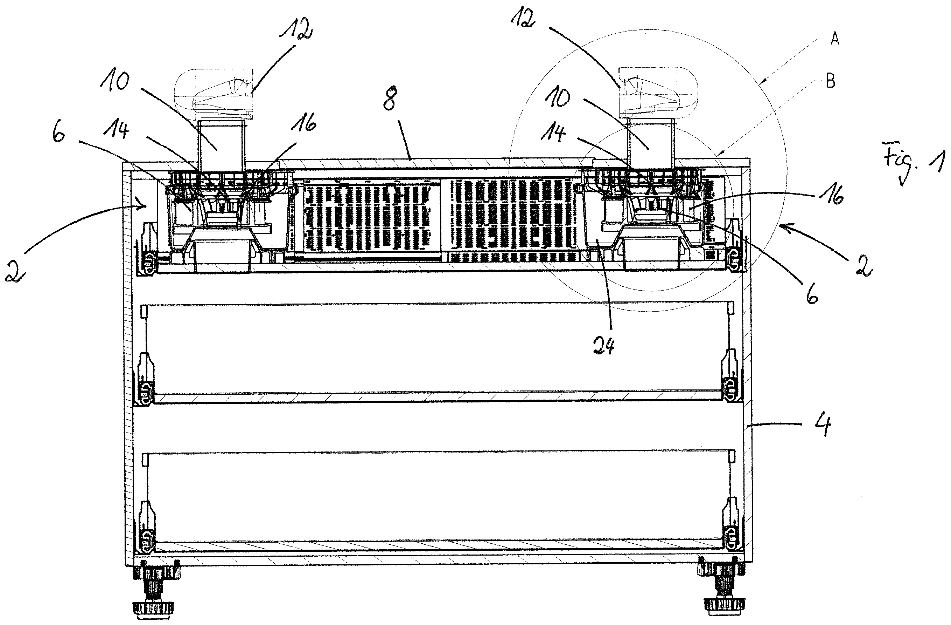

In Fig. 1 ist ein Unterschrank 4 gezeigt, in den zwei Dunstabzugsvorrichtungen 2 eingebaut sind. Jede Dunstabzugsvorrichtung 2 verfügt über ein Absauggebläse 6. Die beiden Dunstabzugsvorrichtungen 2 sind auf der rechten und linken Seite eines Kochfeldes 8 angeordnet. Bei beiden Dunstabzugsvorrichtungen 2 wird die Abluft durch einen ersten Luftführungskanal 10 von einer kochfeldseitigen Mündungsöffnung 12 zur Ansaugöffnung 14 des jeweiligen Radiallüfters 16 geleitet. Im Ausführungsbeispiel sind zwei Dunstabzugsvorrichtungen 2 für ein Kochfeld 8 gezeigt, es ist natürlich auch möglich, die Abluft nur mit einer einzigen Dunstabzugsvorrichtung 2 abzusaugen. Die Mündungsöffnungen 12 befinden sich in einem Gehäuse, das auf einen darunter befindlichen Schaft aufgesteckt ist. Die Gehäuse mit der Mündungsöffnung 12 sind drehbar auf das Schaftstück aufgesetzt. Die Gehäuse können natürlich auch in einer anderen Form ausgebildet sein, als es in den Figuren des Ausführungsbeispiels gezeigt ist.

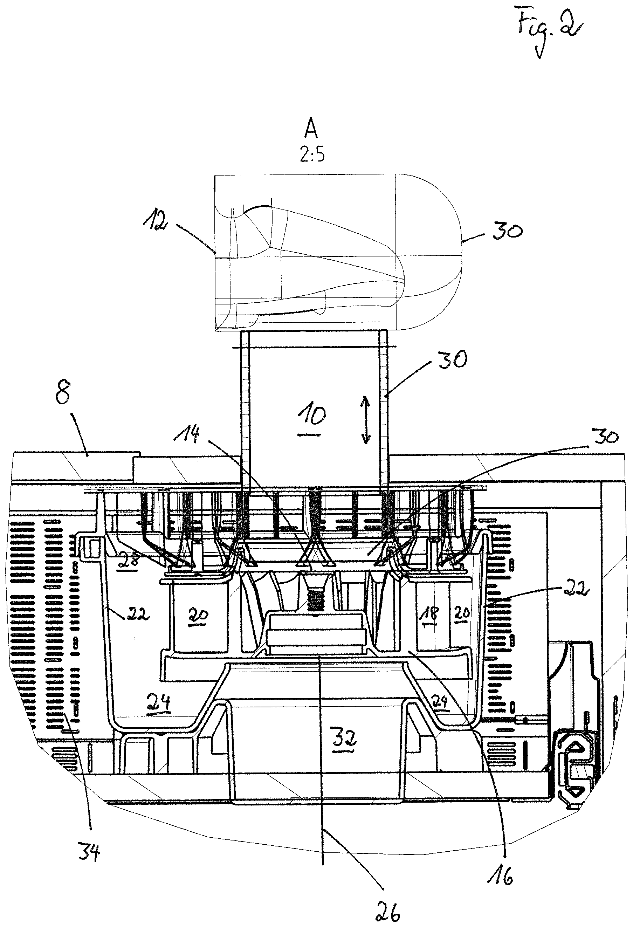

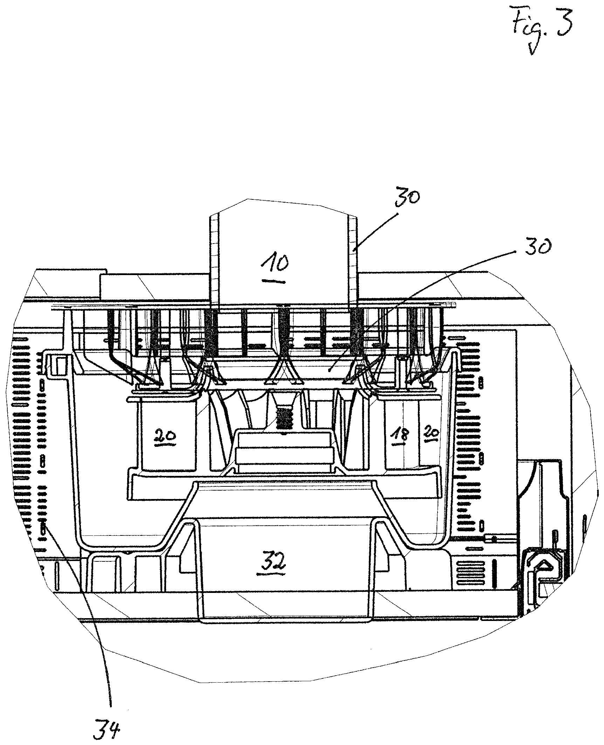

Die genaueren Details über die Ausgestaltung des Absauggebläses 6 lassen sich den vergrößerten Ansichten A und B aus Fig. 1 entnehmen, die in den Figuren 2 und 3 gezeigt sind.

In Fig. 1 ist erkennbar, dass die beiden Absauggebläse 6 sehr kompakt bauen und deshalb in einer Schublade eines Küchen-Unterschranks 4 untergebracht werden können. Die Radiallüfter 16 können mit der Schublade aus dem Unterschrank 4 für Wartungszwecke herausgezogen werden. Der Radiallüfter 16 des Absauggebläses 6 kann dabei leicht nach oben hin aus seiner Einbaulage in der Schublade entnommen werden. Genauso kann auch der Auffangbehälter 24 aus der Schublade nach oben hin entnommen werden, um diesen zu reinigen.

In Fig. 2 ist der Radiallüfter 16 in einer vergrößerten Ansicht gezeigt. Der Radiallüfter 16 verfügt über eine Anzahl von Luftschaufeln 18, die den Abluftstrom von der Mündungsöffnung 12 durch den ersten Luftführungskanal 10 hindurch in die Ansaugöffnung 14 hineinsaugen, von wo aus der Abluftstrom in die Durchströmungsräume eintritt, die sich zwischen den Luftschaufeln 18 befinden. Dort wird der Abluftstrom durch die besondere Raumgestaltung der Luftschaufeln 18 beschleunigt. Aus den Durchströmungsräumen tritt der Abluftstrom dann in einer etwa axialen Richtung in den Ringraum 20 aus, wo er durch die Seitenwand 22 wieder in eine zumindest annähernd axiale Richtung umgelenkt wird. Bei der Umlenkung werden im Abluftstrom bewegte Schwebstoffe wie beispielsweise auch Fette und Öltropfen auf die Seitenwand 22 geschleudert, wo diese anhaften und so dann nach unten in den Auffangbehälter 24 hinein ablaufen. Der Radiallüfter 16 dreht sich mit hoher Geschwindigkeit um die Drehachse 26. Der Abluftstrom im Ringraum 20 strömt nach oben hin durch den zweiten Luftführungskanal 28 durch die dort sichtbaren Schlitze in den Innenraum des Unterschranks 4 aus. Da der Ringraum 20 nach unten hin durch den Auffangbehälter 24 geschlossen ausgebildet ist, kann der Abluftstrom nur durch den zweiten Luftführungskanal 28 nach oben hin entweichen.

Im Hintergrund des Absauggebläses 6 ist in den Figuren 1 bis 4 eine Filtereinheit 34 angedeutet. Der Innenraum des Unterschranks 4 kann nach außen hin bei geschlossener Schublade luftdicht abgedichtet sein, so dass der in den Innenraum des Unterschranks 4 eingeblasene Abluftstrom nur durch die Filtereinheit 34, hinter der sich eine Entlüftungsöffnung im Korpus des Unterschranks 4 befindet, aus dem Innenraum austreten kann. In der Filtereinheit 34 ist ein Filtermedium angeordnet, mit dem Großmoleküle und andere Stoffe aus der Luft ausgefiltert werden können, die in der Abluft der Dunstabzugsvorrichtung 2 unerwünscht sind. Die Filtereinheit 34 ist insbesondere dann von Interesse, wenn die Dunstabzugsvorrichtung 2 in einem Umluftbetrieb betrieben wird. Aber auch bei einem Abluftbetrieb kann es sinnvoll sein, eine Filtereinheit 34 vorzusehen.

Unterhalb des Radiallüfters 14 befindet sich ein Motorgehäuse 32, in dem der Antriebsmotor für den Radiallüfter 16 angeordnet sein kann.

In den Figuren 2 und 3 ist erkennbar, dass der erste Luftführungskanal 10 aus mehreren Kanalbauteilen 30 zusammengesetzt ist. Im Ausführungsbeispiel sind das das obere Gehäuse mit der Mündungsöffnung 12, das mittlere Kanalbauteil 30, sowie ein Kragenstück, das sich als unteres Kanalbauteil 30 im Bereich der Ansaugöffnung 14 des Radiallüfters 16 befindet. Die einzelnen Kanalbauteile 30 sind über Steckkupplungen miteinander verbunden. Sie können bevorzugt werkzeuglos voneinander getrennt werden. Dadurch ist es möglich, auf schnelle und einfache Art die Kanalbauteile 30 von der Arbeitsfläche neben dem Kochfeld 8 zu entfernen, so dass die Fläche danach als plane Fläche für Arbeiten in der Küche genutzt werden kann. Die Kanalbauteile 30 können bei Nichtgebrauch in der Schublade des Unterschranks 4 abgelegt werden, in der sich auch das Absauggebläse 6 befindet.

Wenn im Ausführungsbeispiel das obere Gehäuse 30 und das mittlere Kanalbauteil 30 aus der Betriebsposition entfernt sind, kann der sich dann öffnende Schacht zum Radiallüfter 16 durch einen entsprechenden Deckel verschlossen sein. Zeichnerisch nicht näher dargestellt ist eine Haltemuffe, in die das mittlere Kanalbauteil 30 durch die Ebene des Kochfeldes 8 und der angrenzenden Arbeitsfläche nach unten hin durchgeschoben ist.

Wenn das obere Gehäuse 30 und das mittlere Kanalbauteil 30 einstückig ausgebildet sind, bilden beiden Abschnitte zusammen das obere Kanalbauteil 30. Im Sinne der vorliegenden Beschreibung und der Ansprüche ist das in den Figuren 2 und 3 gezeigte mittlere Kanalbauteil 30, das einen rohrförmigen Abschnitt ausbildet, auch ein oberes Kanalbauteil 30. Die Entfernbarkeit des oberen Kanalbauteils 30 ist in Fig. 2 durch den im Bereich des Kanalbauteils 30 eingezeichneten Doppelpfeil kenntlich gemacht.

Aus den vergrößerten Ansichten in den Figuren 2 und 3 ist erkennbar, dass das Kanalbauteil 30, das bis in den Bereich der Ansaugöffnung 14 des Radiallüfters 16 hinabreicht, in einer Einsteckposition in die Arbeitsplatte den Radiallüfter 16 in seiner Einbaulage fixiert. Der Radiallüfter 16 kann mit dem Schubladenauszug nicht mehr aus dem Küchenschrank 4 herausgezogen werden, weil eine solche Ausziehbewegung durch die formschlüssige Fixierung des oberen Kanalbauteils 30 in der Arbeitsplatte blockiert ist. Das obere Kanalbauteil 30 bildet auf diese Weise eine Sicherung, dass der Radiallüfter 16 bei eingesteckten oberen Kanalbauteil 30 nicht ausgezogen werden kann.

Zwischen dem Radiallüfter 16 und dem Auffangbehälter 24 ist eine Trennstelle ausgebildet, über die der Radiallüfter 16 mit dem Auffangbehälter 24 werkzeuglos lösbar verbunden ist. Die Trennstelle kann beispielsweise die Motorwelle des Antriebsmotors sein, von der der Radiallüfter 16 auf einfache Weise abziehbar sein kann. Im Ausführungsbeispiel greift die Motorwelle auch durch eine Ausnehmung im Auffangbehälter 24 hindurch.

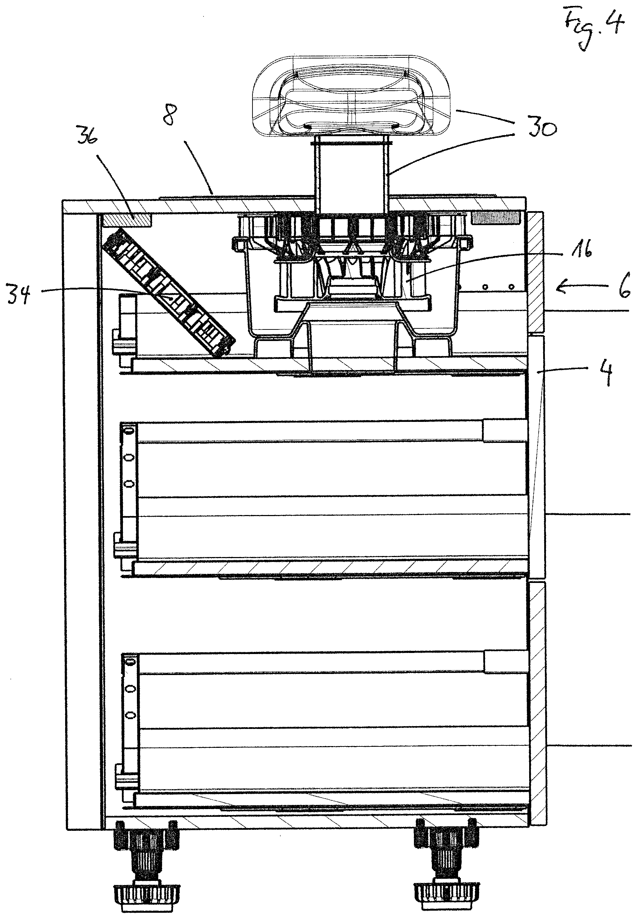

Die Fig. 4 zeigt die in den Figuren 1 bis 3 abgebildete Dunstabzugsvorrichtung aus einer Seitenansicht. In der Seitenansicht sind die oberen Kanalbauteile 30 gut erkennbar. In der Seitenansicht ist aber insbesondere zu sehen, dass die Filtereinheit 34 schräg im Unterschrank 4 angeordnet ist. Durch die schräge Anordnung wird in der Höhe Bauraum gespart. Durch die Anlage der Filtereinheit 34 an einem Dichtungsbauteil 36, das mit dem Unterschrank 4 verbunden ist, ist der Innenraum des Unterschranks 4, in dem die beiden Absauggebläse 6 angeordnet sind, luftdicht abgeschlossen.

Die vorstehende gegenständliche Beschreibung dient nur der Erläuterung der Erfindung. Die Erfindung ist nicht auf das beschriebene Ausführungsbeispiel beschränkt.

Dem Fachmann bereitet es keine Schwierigkeiten, die Erfindung durch Abwandlung des Ausführungsbeispiels auf eine ihm als geeignet erscheinende Weise an einen konkreten Anwendungsfall anzupassen.

## Patentansprüche

1. Dunstabzugsvorrichtung (2) mit einem ersten Luftführungskanal (10), der eine Mündungsöffnung (12) aufweist, die in einer ersten Ebene auf oder oberhalb der Ebene eines Kochfeldes (8) gelegen ist, wobei der erste Luftführungskanal (10) die angesaugte Abluft in einen Bereich unterhalb der Ebene eines Kochfeldes (8) ableitet, und der erste Luftführungskanal (10) mit einem in einer zweiten Ebene unterhalb des Kochfeldes (8) angeordneten Absauggebläse (6) verbunden ist, **dadurch gekennzeichnet, dass** das Absauggebläse (6) einen Radiallüfter (16) aufweist, der in der zweiten Ebene unterhalb des Kochfeldes (8) angeordnet ist, wobei die Ansaugöffnung (14) des Radiallüfters (16) nach oben dem Kochfeld (8) zugewandt ist und der erste Luftführungskanal (10) in der Ansaugöffnung (14) des Radiallüfters (16) mündet, um den Radiallüfter (16) herum ein diesen ringförmig umschließender und nach oben in Richtung des Kochfeldes (8) geschlossener Ringraum (20) ausgebildet ist, in den der zwischen den Luftschaufeln (18) aus dem Radiallüfter (16) ausströmende Abluftstrom einströmt, der Ringraum (20) eine zum Außenumfang des Radiallüfters (16) beabstandete Seitenwand (22) aufweist, durch die der aus dem Radiallüfter (16) in einer zur Drehachse (26) des Radiallüfters (16) zumindest annähernd radialen Richtung austretende Abluftstrom in eine zur Drehachse (26) zumindest annähernd axialen Strömungsrichtung umgelenkt wird, und in einer dritten Ebene unterhalb des Radiallüfters (16) ein Auffangbehälter (24) zum Auffangen von an der Seitenwand (22) ablaufenden Partikeln ausgebildet ist, wobei der Abluftstrom aus dem Ringraum (20) in einem zweiten Luftführungskanal (28), der den Abluftstrom in eine vom Auffangbehälter (24) weg weisende Strömungsrichtung leitet, aus dem Absauggebläse (6) ausströmt.

2. Dunstabzugsvorrichtung (2) nach Anspruch 1, **dadurch gekennzeichnet, dass** der erste Luftführungskanal (10) mehrteilig mit zumindest einem oberen und einem unteren Kanalbauteil (30) ausgebildet ist, an den einander zugewandten Enden der Kanalbauteile (30) Steckkupplungen ausgebildet sind, über die die Kanalbauteile (30) werkzeuglos lösbar und luftdicht miteinander verbindbar sind, und das obere Kanalbauteil (30), an dem die Mündungsöffnung (12) ausgebildet ist, mit dem von der Mündungsöffnung (12) abgewandten Ende durch die Ebene des Kochfelds (8) hindurch in die Steckkupplung eines unterhalb der Ebene des Kochfelds (8) endenden unteren Kanalbauteils (30) wahlweise einsteckbar ist.

3. Dunstabzugsvorrichtung (2) nach Anspruch 2, **dadurch gekennzeichnet, dass** mit dem Kochfeld (8) oder einer das Kochfeld (8) umgebenden Arbeitsplatte eine Haltemuffe fest verbunden ist, die eine Öffnung aufweist, deren Maß und Form dem Außenumfang des oberen Kanalbauteils (30) entspricht, wobei die Haltemuffe eine Führungshilfe beim Einschieben des unteren Endes des oberen Kanalbauteils (30) in die Steckkupplung des unterhalb der Ebene des Kochfelds endenden unteren Kanalbauteils (30) bildet.

4. Dunstabzugsvorrichtung (2) nach Anspruch 3, **dadurch gekennzeichnet, dass** die Öffnung der Haltemuffe mit einem Deckel verschließbar ist, wenn das obere Kanalbauteil (30) nicht in die Haltemuffe und die Steckkupplung des unterhalb der Ebene des Kochfelds (8) endenden unteren Kanalbauteils (30) eingesteckt ist.

5. Dunstabzugsvorrichtung (2) nach einem der vorhergehenden Ansprüche, **dadurch gekennzeichnet, dass** das obere Kanalbauteil (30) als ein Rohrbogen ausgebildet ist, dessen unterer Schaft in vertikaler Richtung auf das obere Ende eines unteren Kanalbauteils (30) aufsteckbar ist und dessen mittlerer Abschnitt und/oder das der Mündungsöffnung (12) zugewandte Ende eine Krümmung aufweist.

6. Dunstabzugsvorrichtung (2) nach einem der vorhergehenden Ansprüche, **dadurch gekennzeichnet, dass** der Radiallüfter (16) in einen Unterschrank (4) in einer zweiten Ebene unterhalb des Kochfeldes (8) in einen Auszug eingebaut ist, der aus einer Gebrauchsstellung im Unterschrank (4) in eine Wartungsposition außerhalb des Unterschranks (4) verbringbar ist.

7. Dunstabzugsvorrichtung (2) nach Anspruch 6, **dadurch gekennzeichnet, dass** das obere Kanalbauteil (30) in seiner Einsteckposition den Radiallüfter (16) und den Auszug in der Gebrauchsstellung arretiert.

8. Dunstabzugsvorrichtung (2) nach einem der vorhergehenden Ansprüche, **dadurch gekennzeichnet, dass** zwischen dem Radiallüfter (16) und dem Auffangbehälter (24) eine Trennstelle ausgebildet ist, über die der Radiallüfter (16) mit dem Auffangbehälter (24) werkzeuglos lösbar verbunden ist.

9. Dunstabzugsvorrichtung (2) nach einem der Ansprüche 6 bis 8, **dadurch gekennzeichnet, dass** der Auffangbehälter (24) werkzeuglos lösbar mit dem Auszug verbunden ist.

10. Dunstabzugsvorrichtung (2) nach einem der vorhergehenden Ansprüche, **dadurch gekennzeichnet, dass** der Radiallüfter (16) aus dem zweiten Luftführungskanal (28) in den Innenraum eines Unterschranks (4) bläst, dessen Innenraum zu angrenzenden Bauteilen und im Bereich der Zugangsöffnung luftdicht abgedichtet ist, wobei der Unterschrank (4) eine Ausblasöffnung aufweist, der eine Filtereinheit (34) zugeordnet ist.

11. Dunstabzugsvorrichtung (2) nach Anspruch 10, **dadurch gekennzeichnet, dass** die Filtereinheit (34) aus zumindest einer großflächig angeordneten Lage eines Filtermaterials besteht.

12. Dunstabzugsvorrichtung (2) nach einem der vorhergehenden Ansprüche, **dadurch gekennzeichnet, dass** eine Steckkupplung mit einem elektrischen Kontakt versehen ist, der als Sensor und/oder Stromanschluss ausgebildet ist.

## Claims

1. Extractor device (2) having a first air-guiding channel (10), having a mouth opening (12), which is in a first plane positioned onto or above the plane of a hob (8), wherein said first air-guiding channel (10) discharges the sucked-in discharge air into an area below the plane of a hob (8), and said first air-guiding channel (10) is connected with an extraction fan (6) arranged in a second plane below said hob (8), **characterized in that** the extraction fan (6) has a centrifugal blower (16), which is arranged in the second plane below said hob (8), wherein the suction opening (14) of the centrifugal blower (16) faces upwards to the hob (8) and said first air-guiding channel (10) opens in the suction opening (14) of the centrifugal blower (16), wherein around the centrifugal blower (16), an annular space (20) is shaped, annularly encompassing the centrifugal blower (16) and closed in a direction upwards to the hob (8), wherein the discharge airflow flowing between the vanes (18) out of the centrifugal blower (16) flows into said annular space (20), which has a side wall (22) spaced apart from the outer circumference of the centrifugal blower (16), by means of which the airflow, leaving the centrifugal blower (16) in an at least approximately radial direction towards the rotation axis (26) of the centrifugal blower (16), is deflected into a flow direction being at least approximately axial towards the rotation axis (26), and wherein in a third plane below the centrifugal blower (16) a collection vessel (24) for collecting particles running off at the side wall (22) is provided, wherein the discharge airflow flows out of the annular space (20) in a second air-guiding channel (28), which guides the discharge airflow in a flow direction facing away from the collection vessel (24), out of the extraction fan (6).

2. Extractor device (2) according to claim 1, **characterized in that** said first air-guiding channel (10) is formed of multiple parts having at least one upper and one lower channel component (30), at the facing ends of said channel components (30) plug-in couplings are provided, via which said channel components (30) can be airtightly connected with each other in a toollessly detachable manner, and said upper channel component (30), where the mouth opening (12) is formed, can optionally be plugged with its end facing away from the mouth opening (12) through the plane of the hob (8) into the plug-in coupling of a lower channel component (30) ending below the plane of said hob (8).

3. Extractor device (2) according to claim 2, **characterized in that** a retention sleeve is firmly connected with the hob (8) or with a work surface surrounding said hob (8), having an opening of size and form corresponding to the outer circumference of the upper channel component (30), wherein the retention sleeve forms a guiding aid for inserting the lower end of the upper channel component (30) into the plug-in coupling of the lower channel component (30) ending below the plane of the hob.

4. Extractor device (2) according to claim 3, **characterized in that** the opening of the retention sleeve can be locked with a cover, when said upper channel component (30) is not plugged into the retention sleeve and the plug-in coupling of said lower channel component (30) ending below the plane of the hob (8).

5. Extractor device (2) according to one of the preceding claims, **characterized in that** the upper channel component (30) is shaped as a pipe elbow, the lower shaft of which can be plugged in vertical direction onto the upper end of a lower channel component (30) and the central portion of which and/or the end facing the mouth opening (12) having a curvature.

6. Extractor device (2) according to one of the preceding claims, **characterized in that** the centrifugal blower (16) is installed into a lower cabinet (4) in a second plane below the hob (8) into a drawer, which can be shifted from a use position inside said lower cabinet (4) into a maintenance position outside said lower cabinet (4).

7. Extractor device (2) according to claim 6, **characterized in that** the upper channel component (30) in its plug-in position locks the centrifugal blower (16) and the drawer in the use position.

8. Extractor device (2) according to one of the preceding claims, **characterized in that** between the centrifugal blower (16) and the collection vessel (24), a disconnection point is provided via which said centrifugal blower (16) is connected with said collection vessel (24) in a toollessly detachable manner.

9. Extractor device (2) according to one of the claims 6 to 8, **characterized in that** said collection vessel (24) is connected with said drawer in a toollessly detachable manner.

10. Extractor device (2) according to one of the preceding claims, **characterized in that** said centrifugal blower (16) blows out of the second guiding channel (28) into the interior of a lower cabinet (4), the interior of which is airtightly sealed against the adjoining components and in the area of the access opening, wherein said lower cabinet (4) has a discharge opening comprising a filter unit (34).

11. Extractor device (2) according to claim 10, **characterized in that** said filter unit (34) consists of at least one layer of a filter material is extensively arranged.

12. Extractor device (2) according to one of the preceding claims, **characterized in that** a plug-in coupling is provided with an electrical contact which is designed as a sensor and/or power connector.

## Revendications

1. Hotte aspirante (2) avec une première conduite d'air (10) qui présente une embouchure (12) qui est située dans un premier plan ou au-dessus du plan d'une table de cuisson (8), dans laquelle la première conduite d'air (10) évacue l'air aspiré dans une zone au-dessous du plan d'une table de cuisson (8), et la première conduite d'air (10) est reliée avec un ventilateur extracteur (6) disposé dans un deuxième plan au-dessous de la table de cuisson (8), **caractérisée en ce que** le ventilateur extracteur (6) présente un ventilateur radial (16) qui est disposé dans le deuxième plan au-dessous de la table de cuisson (8), l'ouverture d'aspiration (14) du ventilateur radial (16) étant orientée vers le haut de la table de cuisson (8) et la première conduite d'air (10) débouchant dans l'ouverture d'aspiration (14) du ventilateur radial (16), autour du ventilateur radial (16) étant formé un espace annulaire fermé (20) encerclant celui-ci et orienté vers le haut en direction de la table de cuisson (8), dans lequel le flux d'air évacué s'écoulant entre les pales (18) du ventilateur radial (16) afflue, l'espace annulaire (20) présentant une face latérale (22) espacée de la périphérie extérieure du ventilateur radial (16) par laquelle l'air évacué sortant du ventilateur radial (16) dans une direction au moins sensiblement radiale par rapport à l'axe de rotation (26) du ventilateur radial (16) est dévié dans une direction au moins sensiblement axiale par rapport à l'axe de rotation (26), et un récipient collecteur (24) étant formé dans un troisième plan au-dessous du ventilateur radial (16) pour collecter des particules s'écoulant sur la face latérale (22), l'air évacué de l'espace annulaire (20) s'écoulant du ventilateur extracteur (6) dans une deuxième conduite d'air (28) qui conduit l'air évacué dans une direction d'écoulement s'éloignant du récipient collecteur (24).

2. Hotte aspirante (2) selon la revendication 1, **caractérisée en ce que** la première conduite d'air (10) est formée de plusieurs parties avec au moins des éléments de conduite supérieur et inférieur (30), aux extrémités se faisant face des éléments de conduite (30) étant formés des raccords d'enfichage par lesquels les éléments de conduite (30) peuvent être reliés entre eux sans outil de façon démontable et étanche à l'air, et l'élément de conduite (30) supérieur, sur lequel l'embouchure (12) est formée, peut être enfiché au choix avec l'extrémité éloignée de l'embouchure (12) à travers le plan de la table de cuisson (8) dans le raccord d'enfichage d'un élément de conduite (30) inférieur aboutissant au-dessous du plan de la table de cuisson (8).

3. Hotte aspirante (2) selon la revendication 2, **caractérisée en ce qu'**à la table de cuisson (8) ou à un plan de travail entourant la table de cuisson (8) est attaché un manchon de retenue qui présente une ouverture dont la dimension et la forme correspondent à la périphérie extérieure de l'élément de conduite (30) supérieur, le manchon de retenue formant un accessoire de guidage pour insérer l'extrémité inférieure de l'élément de conduite (30) supérieur dans le raccord d'enfichage de l'élément de conduite (30) aboutissant au-dessous du plan de la table de cuisson (8).

4. Hotte aspirante (2) selon la revendication 3, **caractérisée en ce que** l'ouverture du manchon de retenue peut être obturée avec un couvercle quand l'élément de conduite (30) supérieur n'est pas inséré dans le manchon de retenue et le raccord d'enfichage de l'élément de conduite (30) aboutissant au-dessous du plan de la table de cuisson (8).

5. Hotte aspirante (2) selon une des revendications précédentes, **caractérisée en ce que** l'élément de conduite (30) supérieur est configuré comme un tube coudé dont la tige inférieure peut être enfichée dans la direction verticale sur l'extrémité supérieure d'un élément de conduite (30) inférieur et dont la section médiane et/ou l'extrémité orientée vers l'embouchure (12) présente une courbure.

6. Hotte aspirante (2) selon une des revendications précédentes, **caractérisée en ce que** le ventilateur radial (16) est installé dans une armoire basse (4) située dans un deuxième plan au-dessous de la table de cuisson (8), dans un tiroir qui peut être déplacé d'une position d'utilisation dans l'armoire basse (4) vers une position de maintenance à l'extérieur de l'armoire basse (4).

7. Hotte aspirante (2) selon la revendication 6, **caractérisée en ce que** l'élément de conduite (30) supérieur bloque dans sa position d'enfichage le ventilateur radial (16) et le tiroir dans la position d'utilisation.

8. Hotte aspirante (2) selon une des revendications précédentes, **caractérisée en ce qu'**entre le ventilateur radial (16) et le récipient collecteur (24) est formée une interface par laquelle le ventilateur radial (16) est relié avec le récipient collecteur (24) sans outil de façon démontable.

9. Hotte aspirante (2) selon une des revendications 6 à 8, **caractérisée en ce que** le récipient collecteur (24) est relié sans outil de façon démontable avec le tiroir.

10. Hotte aspirante (2) selon une des revendications précédentes, **caractérisée en ce que** le ventilateur radial (16) souffle depuis la deuxième conduite d'air (28) dans l'espace intérieur d'une armoire basse (4) dont l'espace intérieur est rendu étanche à l'air par rapport aux éléments voisins et dans la région de l'ouverture d'accès, l'armoire basse (4) présentant une ouverture d'évacuation à laquelle est associée une unité de filtrage (34).

11. Hotte aspirante (2) selon la revendication 10, **caractérisée en ce que** l'unité de filtrage (34) est constituée d'au moins une couche d'un matériau filtrant disposée sur une grande surface.

12. Hotte aspirante (2) selon une des revendications précédentes, **caractérisée en ce qu'**il est prévu un raccord d'enfichage avec un contact électrique qui est configuré comme un capteur et/ou un raccord électrique.
